# EUROPEAN PATENT SPECIFICATION

(11) **EP 4 036 486 B1**
(45) Date of publication and mention of the grant of the patent: **14.05.2025**
(21) Application number: 21154271.7
(22) Date of filing: 29.01.2021
(51) Int. Cl.: F24F 1/0035, F24F 11/00, F24F 12/00, F24F 13/14

(54) **INTEGRATED HVAC SYSTEM FOR A BUILDING**
INTEGRIERTES HLK-SYSTEM FÜR EIN GEBÄUDE
SYSTÈME HVAC INTÉGRÉ POUR UN BÂTIMENT

(43) Date of publication of application: 03.08.2022
(73) Proprietor: DAIKIN INDUSTRIES, LTD., Osaka-Shi, Osaka 530-0001 (JP); Daikin Europe N.V., 8400 Oostende (BE)
(72) Inventor: Aspeslagh, Bart, 8400 Oostende (BE)
(74) Representative: Hoffmann Eitle

(56) References cited:
- EP-A1- 3 686 501
- EP-A2- 1 486 736
- WO-A1-2015/075782
- GB-A- 2 541 326
- US-A1- 2012 064 818
- US-A1- 2015 211 777
- US-A1- 2019 203 971
- US-B1- 9 920 963

## Description

### Technical Field

The present invention relates to an integrated heating, ventilation and air conditioning (HVAC) system for a building with improved performance and energy-efficiency.

### Background

HVAC systems for buildings usually feature a heat pump system, regulating the temperature inside the building, and a separate ventilation system, regulating the supply of fresh air to the inside of the building.

Heat pump systems usually comprise a heat-source-side unit, a utilization-side unit, a compressor and an expansion valve, connected by a refrigerant circuit. Depending on its flow direction, the refrigerant extracts heat or cold from the outdoor air, or another heat source, and transports it from the heat-source-side unit to the utilization-side unit, where a fan circulates indoor air through the utilization-side unit so that the indoor air is heated or cooled to the desired temperature or a given temperature is maintained.

Ventilation systems with heat/cold recovery function feature a ventilation heat exchanger that allows the fresh outdoor air blown to the inside of the building to extract heat or cold from the stale indoor air blown to the outside of the building in order to save energy for heating up or cooling down the outdoor air.

As heat pump and ventilation systems are usually independent from each other, potential synergies from combining both systems are passed up.

Even though ventilation systems with heat/cold recovery function are generally more energy-efficient, there are cases when it is rather counterproductive. At night, for example, when the outdoor air is cool and the indoor air temperature in the bedroom is to be reduced for a better sleep, the heat/cold recovery function counteracts a fast cooling of the indoor air so that the heat pump must provide additional cold. If the cool outdoor air was instead supplied directly into the room, the desired temperature could be reached faster and more efficiently ("free cooling"). The same applies vice-versa to the case when cold indoor air is to be heated while the outdoor air is rather warm ("free heating").

Ventilation systems, which supply fresh air to an indoor space, help to maintain a good indoor air quality (IAQ). They usually operate continuously or according to a schedule instead of following the actual demand of fresh air, which depends, inter alia, on the amount of people in a room using up the indoor air. As a result, the IAQ level may decrease, e.g. when the occupancy of a room does not correspond to the operating schedule of the ventilation system, or outdoor air is blown into the indoor space and must be heated or cooled even though the demand for fresh air is low and the IAQ level could be maintained without continuously supplying fresh air. Additionally, ventilation systems operate zone wise supplying a plurality of indoor spaces at the same time with fresh air independent on the demand in the respective indoor spaces.

EP 1 486 736 A2 provides an air conditioning system, in which an indoor unit installed on a ceiling and a duct for ventilation are combined into one compact unit.

JP 2018 084351 A provides an outdoor unit of a refrigerating apparatus having a humidifying function and capable of suppressing a reduction in humidification amount.

US 2019 0203971 A1 provides a unitary air conditioning system with heat recovery function and capable of automatically determining the opening area of an airflow rate adjustment damper and thereby simplifying on-site installation.

US 2012 0064818 A1 discloses a ventilation system for an air conditioning system, wherein one damper controls the flow of ambient air into the system and another damper controls the flow of return air from a room or space being cooled (or heated) by the air conditioning system.

US 2015 0211777 A1 discloses a method and apparatus for cooling a supply of air, wherein a unit controller adjusts an economizer according to an economizing function configured to achieve an initial free cooling target temperature as a discharge air temperature.

WO 2015 075782 A1 discloses an air conditioner comprising a blower, a first aspiration port provided on the upstream side of the blower, an indoor heat exchanger provided on the downstream side of the first aspiration port and on the upstream side of the blower, a compressor, a second aspiration port provided on the downstream side of the indoor heat exchanger and on the upstream side of the blower, a damper, an air outlet provided on the downstream side of the blower and a control unit for controlling the compressor and the damper on the basis of the temperature of the blown air, the temperature of the air in the room to be air-conditioned, and the temperature of the air in the external space.

EP 3 686501 A1 discloses a heat exchange ventilation system with a heat exchange ventilator, a temperature adjustment coil disposed downstream of a heat exchange element in a supply air duct, a return air supply duct that returns the air in a room to a portion of the supply airduct located upstream of the temperature adjustment coil, an air duct switching damper that switches between the supply air duct and the return air supply duct, an outdoor air temperature sensor, a return air temperature sensor and a controller that controls the operations of the heat exchange ventilator, the temperature adjustment coil and the air duct switching damper.

### Disclosure of the Invention

In view of the aforesaid, the present invention aims to provide an integrated heating, ventilation and air conditioning (HVAC) system for a building with improved performance and energy-efficiency.

The invention is defined in claim 1, preferred embodiments are defined in the dependent claims.

The HVAC system for an indoor space of a building according to the invention comprises a heat pump system, a ventilation system, a utilization-side unit, at least one sensor and a control unit. The heat pump system is configured to supply heat or cold to the indoor space and comprises a refrigerant circuit. The ventilation system is configured to supply outdoor air to the indoor space and comprises a ventilation unit configured to draw outdoor air from the outside of the building and an air duct connected to the ventilation unit for guiding the outdoor air to the indoor space. The utilization-side unit is provided in an indoor space and comprises a utilization-side heat exchanger directly or indirectly connected with the refrigerant circuit and configured to exchange heat with the indoor air of the indoor space. Thus, the utilization-side heat exchanger may be part of the refrigerant circuit (direct connection) or be thermally connected to the refrigerant circuit via a further heat exchanger and an intermediate heat transfer medium circuit (indirect connection). The utilization-side unit further comprises an air outlet in fluid communication with the air duct and an outlet valve for adjusting the amount of outdoor air flowing through the air outlet into the indoor space. The at least one sensor is configured to detect a parameter of the indoor space and the control unit is configured to control the outlet valve based on the parameter detected by the sensor.

Combining the supply of heat or cold as well as of fresh air to the indoor space in the utilization-side unit requires no additional ventilation outlets in the indoor space, which saves costs, facilitates installation and improves the visual appearance of the indoor space. Additionally, the combined control of the indoor air temperature (e.g. by adjusting the amount of heat or cold exchanged with the utilization-side heat exchanger) and of the fresh air supply (by adjusting the amount of outdoor air flowing through the outlet valve) with a single device allows a more effective and efficient use of the heat pump system and of the ventilation system.

Preferably, the at least one sensor is provided in the utilization-side unit or in the control unit.

An integrated sensor saves costs, improves reliability and facilitates the installation and the connection to the controller since no additional devices, external wires and/or wireless data interfaces are needed. Fewer installed devices further improve the visual appearance of the indoor space.

The utilization-side unit further comprises a housing, the housing defining a ventilation compartment and an air conditioning compartment, the utilization-side heat exchanger being accommodated in the air conditioning compartment and the air outlet and the outlet valve being accommodated in the ventilation compartment so that the outdoor air is flowable into the indoor space without flowing through the utilization-side heat exchanger.

Outdoor air flowing directly to the indoor space can be used more efficiently for "free cooling" or "free heating" because the delay for changing the temperature of the refrigerant flowing through the heat exchanger can be avoided, which would initially reduce the desired temperature difference. Furthermore, the formation of condensed water in the heat exchanger can be avoided.

In an embodiment not according to the present invention, the outdoor air is flowable into the indoor space after flowing through the utilization-side heat exchanger. For example, the utilization-side unit comprises a housing, the housing defining a ventilation compartment, the utilization-side heat exchanger being accommodated in the air conditioning compartment and the outdoor air is flowing into the ventilation compartment, through the utilization-side heat exchanger and into the indoor space.

By flowing through the utilization-side heat exchanger, the outdoor air is conditioned and mixed with the circulating indoor air before being supplied to the indoor space, resulting in a more homogenous air flow and a more even temperature distribution in the indoor space.

Preferably, the ventilation system is further configured to discharge indoor air from the inside of the building to the outside of the building. The ventilation system may further comprise a ventilation heat exchanger having an outdoor air inlet, an outdoor air outlet, an indoor air inlet and an indoor air outlet and flown through by discharged indoor air and to be supplied outdoor air to exchange heat between the discharged indoor air and the supplied outdoor air. A ventilation bypass may be provided connecting the outdoor air inlet and the outdoor air outlet and bypassing the ventilation heat exchanger. A bypass valve for adjusting the flow of to be supplied outdoor air through the ventilation heat exchanger and through the ventilation bypass may as well be provided, wherein the control unit is further configured to control the bypass valve to adjust the flow of to be supplied outdoor air through the ventilation heat exchanger and through the ventilation bypass.

The ability to direct the outdoor air either through the heat exchanger or through the bypass of the ventilation unit, allows to switch between a "heat/cold recovery" mode, in which the air flows through the heat exchanger in order to improve the air conditioning performance and to save energy when maintaining a constant temperature in the indoor space, and a "free heating/cooling" mode, in which the air flows through the bypass in order to improve the air conditioning performance and to save energy when altering the temperature in the indoor space under certain conditions.

Preferably, the HVAC system further comprises an outdoor temperature sensor for measuring the outdoor air temperature (OAT), wherein the at least one sensor comprises an indoor temperature sensor for measuring the indoor air temperature (IAT) in the indoor space and wherein the control unit is further configured to compare a target indoor air temperature (TIAT) set for the indoor space with a measured outdoor air temperature and a measured indoor air temperature in the indoor space and to control the bypass valve and/or the air outlet valve based on the comparison.

Considering the different temperatures of the outdoor air and of the indoor air and adjusting the air flows to the indoor space accordingly allows to reach and keep a target indoor temperature more effectively and efficiently, especially in case of a high fresh air demand. The indoor air temperature sensor may be integrated in the utilizations-side unit or provided separately in the indoor space and may be connected to the control unit via a wireless data interface. The outdoor air temperature sensor may be integrated in the ventilation unit or in an outdoor unit or provided separately outside the building and may also be connected to the control unit via a wireless data interface.

Preferably, the control unit is further configured to control the air outlet valve such that to be supplied outdoor air flows into the indoor space and/or the bypass valve such that to be supplied outdoor air flows through the ventilation bypass bypassing the ventilation heat exchanger when TIAT < IAT > OAT and/or TIAT > IAT < OAT.

When the target indoor air temperature (TIAT) and the outdoor air temperature (OAT) are lower than the actual indoor air temperature (IAT), it is advantageous to supply outdoor air directly to the indoor space because the cold outdoor air helps to cool down the warm indoor air ("free cooling"). When the target indoor air temperature (TIAT) and the outdoor air temperature (OAT) are higher than the actual indoor air temperature (IAT), it is also advantageous to supply outdoor air directly to the indoor space because the warm outdoor air helps to heat up the cold indoor air ("free heating").

Preferably, the control unit is further configured to control the utilization-side unit such that the utilization-side heat exchanger does not exchange heat with the indoor air of the indoor space when IAT - OAT > TDc and/or OAT - IAT > TDh and/or TIc < TLc and/or TIh < TLh, wherein TDc and TDh are predefined temperature differences, TIc and TIh are the time intervals elapsed since the beginning of the cooling/heating operation and before the target indoor air temperature is reached, and TLc and TLh are predefined time limits.

By prioritizing "free cooling" and "free heating" over active cooling and active heating, respectively, energy can be saved, so that the operating costs and the environmental impact of the HVAC system can be reduced. However, if "free cooling" or "free heating" is not sufficient to reach the target indoor air temperature within a reasonable time, it can be supported by active cooling or active heating, respectively, in order to accelerate the temperature change of the indoor air.

If the temperature difference between the indoor and outdoor air decreases, the target indoor air temperature is reached more slowly. Therefore, it can be advantageous to determine a minimum temperature difference between the indoor and outdoor air for unsupported "free cooling" (TDc) and/or unsupported "free heating" (TDh), respectively. If the corresponding temperature difference is or becomes smaller during the cooling/heating operation, the heat pump system is activated to accelerate the temperature change of the indoor air.

Alternatively, the heat pump system can be activated to accelerate the temperature change of the indoor air if the target indoor air temperature is not reached after predefined time limits for unsupported "free cooling" (TLc) and/or unsupported "free heating" (TLh), respectively, i.e. when the time interval since the beginning of the unsupported "free cooling" (TIc) or of the unsupported "free heating" (TIh) exceeds a corresponding time limit (TLc resp. TLh).

Preferably, the at least one sensor comprises an air quality sensor configured to measure concentrations of carbon dioxide (CO2) and/or volatile organic compounds (VOC) in the indoor space, wherein the control unit is further configured to determine the indoor air quality (IAQ) based on the measured concentrations of carbon dioxide and/or volatile organic compounds, to compare a target indoor air quality (TIAQ) with the determined indoor air quality and to control the air outlet valve for adjusting the flow of to be supplied outdoor air into the indoor space based on the comparison.

Measuring deviations of the actual air quality from a target air quality in an indoor space and adjusting the outdoor air flow to the indoor space accordingly allows to reach and keep a target indoor quality more effectively and efficiently. The air quality sensor may be integrated in the utilizations-side unit or in the control unit or it may be provided separately in the indoor space and/or connected to the control unit via a wireless data interface.

Preferably, the control unit is further configured to control the air outlet valve such that to be supplied outdoor air flows into the indoor space when IAQ < TIAQ and/or TCO2 < CO2 and/or TVOC < VOC, wherein TCO2 and TVOC are target concentrations of carbon dioxide and of volatile organic compounds, respectively.

High concentrations of carbon dioxide (CO2) and/or volatile organic compounds (VOC) result in a low indoor air quality (IAQ). Fresh outdoor air is supplied to the indoor space to improve the indoor air quality if the IAQ value, which is calculated based on the CO2 and VOC concentrations, falls below a target indoor air quality (TIAQ) value and/or if the concentrations of carbon dioxide and/or of volatile organic compounds exceed corresponding target concentrations (TCO2 resp. TVOC). This allows a demand-driven fresh air supply to the indoor space, which is more effective and efficient than a continuous or schedule-driven fresh air supply.

Preferably, the HVAC system further comprises a second utilization-side unit provided in a second indoor space, the utilization-side unit comprising a second utilization-side heat exchanger directly or indirectly connected with the refrigerant circuit and configured to exchange heat with the indoor air of the second indoor space, a second air outlet in fluid communication with the air duct and a second outlet valve for adjusting the amount of outdoor air flowing through the second air outlet into the second indoor space, and at least a second sensor for detecting a second parameter in the second indoor space.

An HVAC system with a common heat pump system, a common ventilation system and multiple individual utilization-side units provided in different indoor spaces and allowing to individually control the heat/cold and fresh air supply to the different indoor spaces, is relatively cost-efficient while providing flexibility in terms of adjusting the air temperature and air quality to the specific conditions and/or requirements in each indoor space. In a bedroom, for example, the demand for cooling and ventilation may be higher during the night while in a living room, the opposite may apply. Thus, the comfort of living as well as the efficiency of the HVAC system can be improved.

In one embodiment, the control unit is further configured to control the second outlet valve based on the second parameter detected by the second sensor.

A centralized control unit controlling the outlet valves of multiple utilization-side units bears cost advantages since fewer control units are required. It may be provided separately or in one of the utilization-side units and may be configured to communicate with the/other utilization-side unit(s) and/or sensors via a wireless data interface.

The control unit may further be configured to control the heat pump system and/or the ventilation system.

A single control unit controlling the entire HVAC system bears the advantage of cost savings since fewer control units are required. By controlling the heat pump system and the ventilation system simultaneously, the efficiency of the HVAC system can further be improved. The control unit may be provided separately or in one of the utilization-side units and may communicate with one or more components of the HVAC system via a wireless data interface. It may further feature an online interface so that the HVAC system can be monitored and controlled remotely and operational data may be collected and transmitted in order to improve the design and operation of the HVAC system.

In another embodiment, the HVAC system further comprises a second control unit configured to control the second outlet valve based on the second parameter detected by the second sensor, wherein the first control unit is provided in the first utilization-side unit and the second control unit is provided in the second utilization-side unit.

Integrated control units save costs, improve reliability and facilitate the installation and the connection to the other components since no additional devices, external wires and/or wireless data interfaces are needed. Fewer installed devices further improve the visual appearance of the indoor space.

In one embodiment, the heat pump system further comprises a refrigerant circuit containing a refrigerant and a heat-source-side unit comprising a heat-source-side heat exchanger connected to the refrigerant circuit and configured to exchange heat between the refrigerant and outdoor air, wherein the utilization-side heat exchanger of the utilization-side unit is connected to the refrigerant circuit and configured to exchange heat between the refrigerant and the indoor air of the indoor space.

An HVAC system with a direct fluid connection between the refrigerant circuit of the heat pump system and the heat exchanger of the utilization-side unit is cost efficient, easy to install and characterized by a high heat exchange efficiency since no additional heat exchangers or fluid circuits are required.

In another embodiment, the heat pump system further comprises a refrigerant circuit containing a refrigerant and a heat-source-side unit comprising a heat-source-side heat exchanger connected to the refrigerant circuit and configured to exchange heat between the refrigerant and outdoor air and an energy transporting fluid circuit containing an energy transporting fluid and an energy transporting fluid heat exchanger connected to the refrigerant circuit and the energy transporting fluid circuit and configured to exchange heat between the refrigerant and the energy transporting fluid, wherein the utilization-side heat exchanger of the utilization-side unit is connected to the energy transporting fluid circuit and configured to exchange heat between the energy transporting fluid and the indoor air of the indoor space.

An HVAC system with a separate energy transporting fluid circuit can be combined with existing, usually water-based, heating circuits and improves the safety since potentially harmful and/or explosive refrigerants cannot escape from the utilization-side unit and leak into the indoor space.

### Brief Description of the Drawings

- Fig. 1a: shows a schematic view of an HVAC system for a building according to a first embodiment
- Fig. 1b: shows a schematic view of an HVAC system for a building according to a second embodiment
- Fig. 2a: shows a schematic view of a utilization-side unit according to an embodiment according to the present invention with opened valve
- Fig. 2b: shows a schematic view of a utilization-side unit according to an embodiment according to the present invention with closed valve
- Fig. 3a: shows a schematic view of a utilization-side unit according to an embodiment not according to the present invention with opened valve
- Fig. 3b: shows a schematic view of a utilization-side unit according to a second embodiment not according to the present invention with closed valve
- Fig. 4a: shows a schematic view of a ventilation unit with air flowing through the heat exchanger
- Fig. 4b: shows a schematic view of a ventilation unit with air flowing through the bypass
- Fig. 5a: shows a schematic 3D view of a utilization-side unit according to a first embodiment.
- Fig. 5b: shows a schematic 3D view of a utilization-side unit according to a second embodiment.
- Fig. 6a: shows a two-dimensional chart with conditions for controlling heating and cooling operations.
- Fig. 6b: shows a flow chart for controlling heating operations.
- Fig. 6c: shows a flow chart for controlling cooling operations.
- Fig. 7a: shows a flow chart for controlling the indoor air quality according to a first embodiment.
- Fig. 7b: shows a flow chart for controlling the indoor air quality according to a second embodiment.

### Detailed Description of the Drawings

The appended figures, which are described in detail below, illustrate preferred embodiments of the invention that are to be understood as exemplary and not as limiting. Features of the embodiments described below may also be used to further characterize the invention defined in the claims.

Same reference numerals listed in different figures refer to identical, corresponding or functionally similar elements.

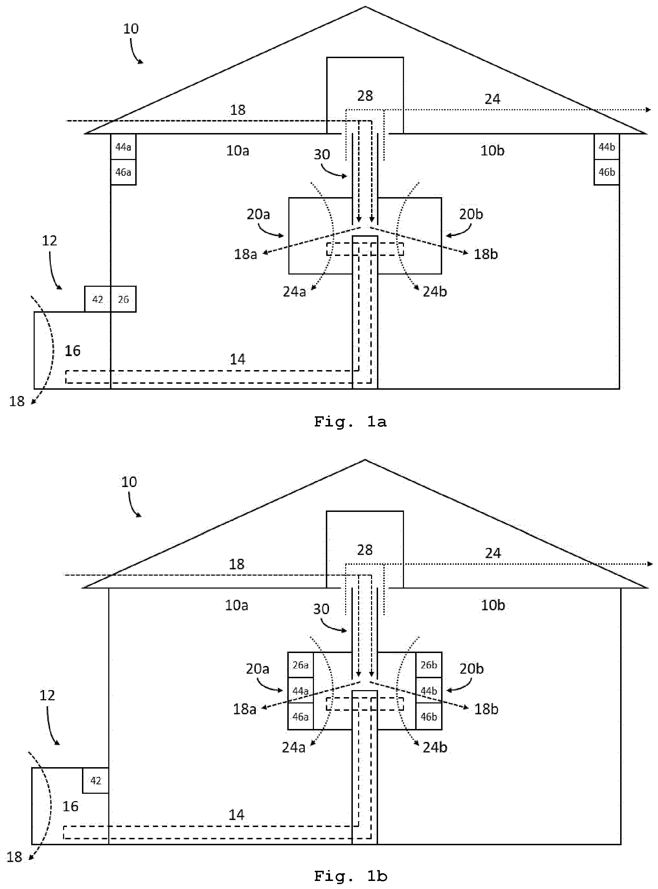

Figs. 1a and 1b show schematic views of an HVAC system for a building 10 according to different embodiments of the invention. In the embodiments shown in Figs. 1a and 1b, the building 10 contains two separate rooms 10a,10b. However, it can as well contain just one or more than two rooms.

The HVAC system of the building 10 basically consists of a heat pump unit 12 and a ventilation unit 28, both of which are controlled by at least a control unit 26,26a,26b.

The heat pump unit 12 comprises a refrigerant circuit 14, a compressor, an expansion valve, a heat-source-side unit 16 exchanging heat with the outdoor air 18 and at least a utilization-side unit 20a,20b exchanging heat with the indoor air 24a,24b of the respective room 10a,10b. The compressor and the expansion valve are accommodated in the heat-source-side unit 16 and not visible.

The ventilation unit 28 draws outdoor air 18 from the outside of the building 10 and supplies it through an air duct 30 to the utilization-side unit(s) 20a,20b while drawing indoor air 24 from the inside of the building 10 and exhausting it to the outside of the building 10. The indoor air 24 is not necessarily drawn from the same room(s) 10a,10b accommodating the utilization-side unit(s) 20a,20b.

In the embodiments shown in Figs. 1a and 1b, the HVAC system further comprises an outdoor temperature sensor 42 measuring the outdoor air temperature (OAT), at least an indoor temperature sensor 44a,44b, measuring the indoor air temperature (IAT), and at least an air quality sensor 46a,46b measuring the indoor air quality (IAQ) based on the concentrations of carbon dioxide (CO2) or volatile organic compounds (VOC) in the corresponding indoor air 24.

In the embodiment shown in Fig. 1a, the control unit 26, the indoor temperature sensor(s) 44a,44b and the air quality sensor(s) 46a,46b are installed separately in the respective room(s) 10a,10b and the outdoor temperature sensor 42 is installed separately outside the building 10, whereas in the embodiment shown in Fig. 1b, the control unit(s) 26a,26b, the indoor temperature sensor(s) 44a,44b and the air quality sensor(s) 46a,46b are integrated in the utilization-side unit(s) 20a,20b, and the outdoor temperature sensor 42 is integrated in the outdoor unit 16.

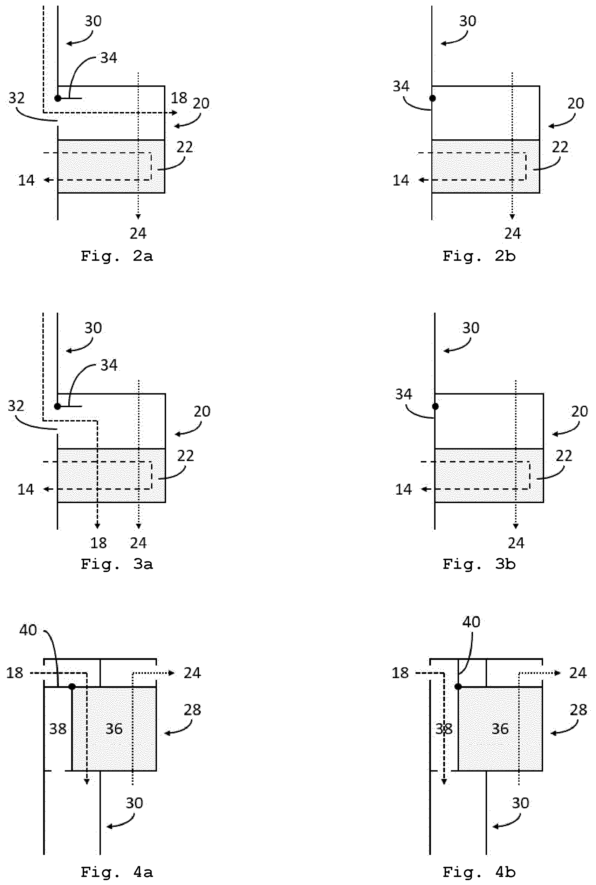

Figs. 2a and 2b show enlarged schematic views of a wall-mounted utilization-side unit 20 according to an embodiment according to the present invention. It comprises a utilization-side heat exchanger 22 that exchanges heat between a refrigerant circuit 14 and indoor air 24 flowing therethrough and is connected to an air duct 30 supplying outdoor air 18 to the utilization-side unit 20. The fan causing the indoor air to flow through the utilization-side heat exchanger 22 is not shown.

An outlet valve 34 controls the air flow from the air duct 30 through the air outlet 32 in the utilization-side unit 20. When the outlet valve 34 is open, outdoor air 18 flows from the air duct 30 through the utilization-side unit 20 directly to the indoor space without flowing through the utilization-side heat exchanger 22 (Fig. 2a). When the outlet valve 34 is closed, the flow of outdoor air 18 through the utilization-side unit 20 is blocked (Fig. 2b).

Figs. 3a and 3b show enlarged schematic views of a wall-mounted utilization-side unit 20 according to an embodiment not according to the present invention. It comprises the same components as the utilization-side unit 20 according to the first embodiment shown in Figs. 2a and 2b above. However, the outdoor air 18 flows now through the utilization-side heat exchanger 22 before entering the indoor space (Fig. 3a). When the outlet valve 34 is closed, the flow of outdoor air 18 through the utilization-side unit 20 is blocked (Fig. 3b).

Figs. 4a and 4b show enlarged schematic views of a ventilation unit 28 supplying outdoor air 18 to the air duct 30 inside the building and exhausting indoor air 24 to the outside of the building. It comprises a ventilation heat exchanger 36, a ventilation bypass 38, a bypass valve 40 and fans causing the respective air flows (not shown). In a first position of the bypass valve 40, the outdoor air 18 flows through the ventilation heat exchanger 36 and exchanges heat with the indoor air 24 flowing out (Fig. 4a), whereas in a second position, it flows through the ventilation bypass 38 directly into the air duct 30 without flowing through the ventilation heat exchanger 36 (Fig. 4b).

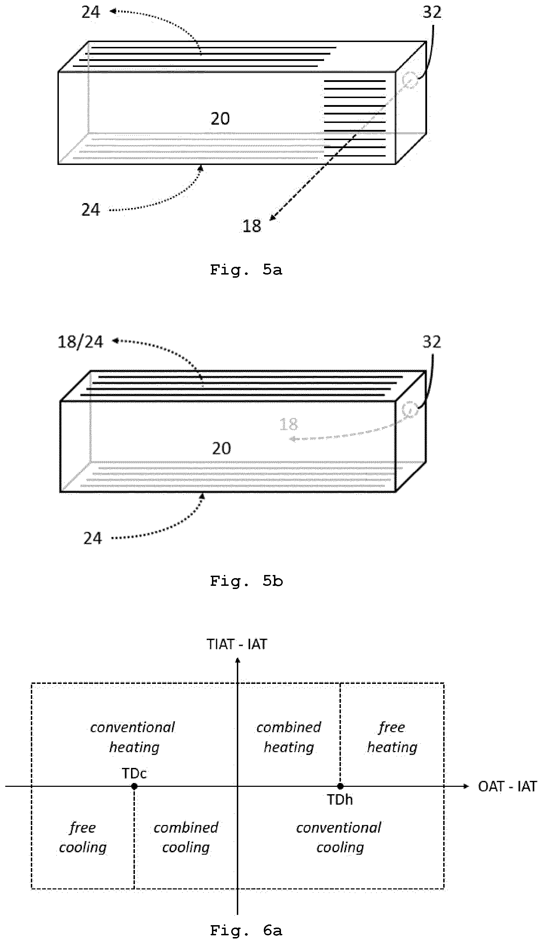

Figs. 5a and 5b show schematic semi-transparent 3-dimensional views of different embodiments of a utilization-side unit 20. In the embodiment according to the present invention illustrated in Fig. 5a, the housing of the utilization-side unit 20 is divided into an air conditioning compartment (left) accommodating the utilization-side heat exchanger (not shown) and a ventilation compartment (right) accommodating the air outlet 32 and the outlet valve (not shown) so that the outdoor air 18 flows directly to the indoor space while the indoor air 24 circulates separately through the utilization-side heat exchanger (not shown).

In the embodiment not according to the present invention illustrated in Fig. 5b the housing of the utilization-side unit 20 is not divided into separate air conditioning and ventilation compartments. Instead, the outdoor air 18 flows through the utilization-side heat exchanger (not shown) and mixes with the circulating indoor air 24 before flowing into the indoor space.

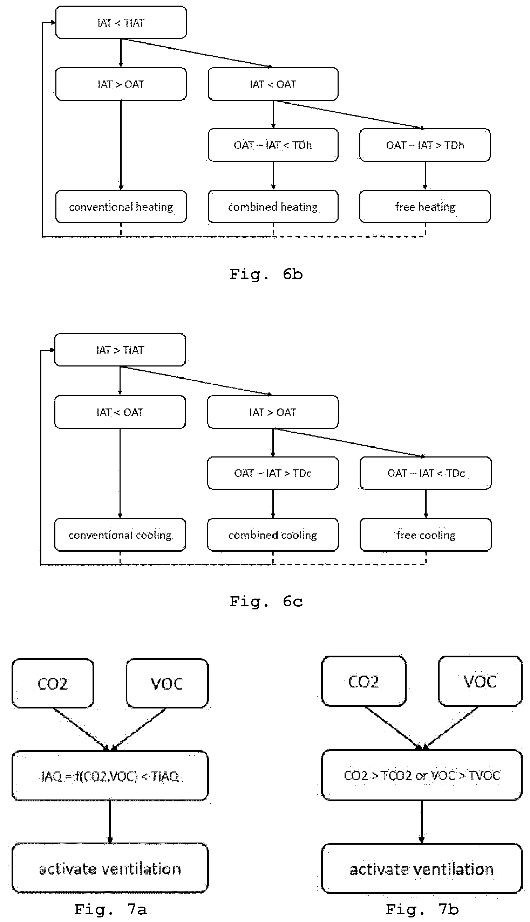

Figs. 6a to 6c show control diagrams for heating and cooling operations, respectively. If the indoor air temperature IAT is lower than the target indoor air temperature TIAT (O<TIAT-IAT, see Fig. 6b), there is a heating demand. If the indoor air temperature IAT is also lower than the outdoor air temperature OAT (0<OAT-IAT), free heating is possible and the bypass valve is operated such that the outdoor air flows through the ventilation bypass. Otherwise, it is operated such that the outdoor air flows through the ventilation heat exchanger and the indoor air is heated conventionally, i.e. by the heat pump system only.

In case the indoor air temperature IAT lower than the outdoor air temperature OAT and the temperature difference between the outdoor air OAT and the indoor air IAT is greater than the minimum temperature difference for exclusive free heating TDh (0<TDh<OAT-IAT), the indoor air is heated only by the outdoor air supplied through the ventilation system (free heating). If the temperature difference is smaller (0<OAT-IAT<TDh), the indoor air is heated by both, conventional as well as free heating.

Similarly, if the indoor air temperature IAT is higher than the target indoor air temperature TIAT (TIAT-IAT<0, see Fig. 6c), there is a cooling demand. If the indoor air temperature IAT is higher than the outdoor air temperature OAT (OAT-IAT<0), free cooling is possible and the bypass valve is operated such that the outdoor air flows through the ventilation bypass. Otherwise, it is operated such that the outdoor air flows through the ventilation heat exchanger and the indoor air is cooled conventionally, i.e. by the heat pump system only.

In case the indoor air temperature IAT is higher than the outdoor air temperature OAT and the (negative) temperature difference between the outdoor air OAT and the indoor air IAT is smaller than the (negative) minimum temperature difference for exclusive free cooling TDc (OAT-IAT<TDc<0), the indoor air is cooled only by the outdoor air supplied through the ventilation system (free cooling). If the temperature difference is greater (TDc<OAT-IAT<0), the indoor air is cooled by both, conventional as well as free cooling.

The absolute values of said minimum temperature differences TDh and TDc may be the same or different. Alternatively, other criteria may be used to determine whether a combined heating or cooling is to be performed. Maximum time limits TLh and TLc can be defined, within which the target indoor air temperature TIAT must be reached before the free heating/cooling is supported by conventional heating/cooling in order to accelerate the temperature change.

As the continuously measured temperatures may change over time, the conditions and, as a consequence, the operational modes may change as well. Given that the temperature difference between the indoor and outdoor air decreases when free heating/cooling is performed, the operational mode may for example switch from exclusive free heating/cooling to combined heating/cooling over the course of time.

Figs. 7a and 7b show flow charts for controlling the indoor air quality IAQ in an indoor space based on the carbon dioxide concentration CO2 and the volatile organic component concentration VOC in the indoor air. In a first embodiment illustrated in Fig. 7a, a value of the indoor air quality IAQ is calculated based on measured CO2 and VOC concentrations, wherein high CO2 and VOC concentrations result in a low IAQ value. If the IAQ value falls below a predefined target indoor air quality value TIAQ, fresh outdoor air is supplied to the indoor space.

In a second embodiment illustrated in Fig. 7b, the CO2 and VOC concentrations are compared directly to respective target values TCO2 and TVOC. If one of the measured CO2 or VOC concentrations exceeds the corresponding target value, fresh outdoor air is supplied to the indoor space. Alternative criteria and/or methods for determining the indoor air quality and the demand for fresh air may be applied as well.

### Reference List

- 10: building
- 10a,10b: indoor space
- 12: heat pump unit
- 14: refrigerant circuit
- 16: heat source-side unit
- 18,18a,18b: outdoor air flow
- 20,20a,20b: utilization-side unit
- 22: utilization-side heat exchanger
- 24,24a,24b: indoor air flow
- 26,26a,26b: control unit
- 28: ventilation unit
- 30: air duct
- 32: air outlet
- 34: outlet valve
- 36: ventilation heat exchanger
- 38: ventilation bypass
- 40: bypass valve
- 42: outdoor temperature sensor (outdoor air)
- 44,44a,44b: indoor temperature sensor (indoor air)
- 46,46a,46b: air quality sensor (indoor air)

## Claims

1. A heating, ventilation and air conditioning (HVAC) system for an indoor space (10a,10b) of a building (10), the HVAC system comprising:
a heat pump system configured to supply heat or cold to the indoor space (10a,10b), the heat pump system comprising a refrigerant circuit (14),
a ventilation system configured to supply outdoor air (18) to the indoor space (10a,10b), the ventilation system comprising
a ventilation unit (28) configured to draw outdoor air (18) from the outside of the building (10) and
an air duct (30) connected to the ventilation unit (28) for guiding the outdoor air (18) to the indoor space (10a,10b),
a utilization-side unit (20) provided in an indoor space (10a,10b), the utilization-side unit (20) comprising
a utilization-side heat exchanger (22) directly or indirectly connected to the refrigerant circuit (14) and configured to exchange heat with the indoor air (24) of the indoor space (10a,10b),
an air outlet (32) in fluid communication with the air duct (30) and
an outlet valve (34) for adjusting the amount of outdoor air (18) flowing through the air outlet (32) into the indoor space (10a,10b),
at least one sensor (44,46) for detecting a parameter of the indoor space (10a,10b) and
a control unit (26) configured to control the outlet valve (34) based on the parameter detected by the sensor (44,46),
**characterized in that**
the utilization-side unit (20) comprises a housing, the housing defining a ventilation compartment and an air conditioning compartment, the utilization-side heat exchanger (22) being accommodated in the air conditioning compartment and the air outlet (32) and the outlet valve (34) being accommodated in the ventilation compartment so that the outdoor air (18) is flowable into the indoor space (10a,10b) without flowing through the utilization-side heat exchanger (22).

2. The HVAC system according to claim 1, wherein
the at least one sensor (44,46) is provided in the utilization-side unit (20) or in the control unit (26).

3. The HVAC system according to any one of the preceding claims, wherein
the ventilation system is further configured to discharge indoor air (24) from the inside of the building (10) to the outside of the building (10) and further comprises
a ventilation heat exchanger (36) having an outdoor air inlet, an outdoor air outlet, an indoor air inlet and an indoor air outlet and flown through by discharged indoor air (24) and to be supplied outdoor air (18) to exchange heat between the discharged indoor air (24) and the supplied outdoor air (18),
a ventilation bypass (38) connecting the outdoor air inlet and the outdoor air outlet and bypassing the ventilation heat exchanger (36), and
a bypass valve (40) for adjusting the flow of to be supplied outdoor air (18) through the ventilation heat exchanger (36) and through the ventilation bypass (38), wherein the control unit (26) is further configured to control the bypass valve (40) to adjust the flow of to be supplied outdoor air (18) through the ventilation heat exchanger (36) and through the ventilation bypass (38).

4. The HVAC system according to claim 3, further comprising
an outdoor temperature sensor (42) for measuring the outdoor air temperature (OAT),
wherein the at least one sensor (44,46) comprises an indoor temperature sensor (44) for measuring the indoor air temperature (IAT) in the indoor space (10a,10b) and
wherein the control unit (26) is further configured to compare a target indoor air temperature (TIAT) set for the indoor space (10a,10b) with a measured outdoor air temperature (OAT) and a measured indoor air temperature (IAT) in the indoor space (10a,10b) and to control the bypass valve (40) and/or the air outlet valve (34) based on the comparison.

5. The HVAC system according to claim 4, wherein
the control unit (26) is further configured to control the air outlet valve (34) such that to be supplied outdoor air (18a,18b) flows into the indoor space (10a,10b) and/or the bypass valve (40) such that to be supplied outdoor air (18) flows through the ventilation bypass (38) bypassing the ventilation heat exchanger (36) when TIAT < IAT > OAT and/or TIAT > IAT < OAT.

6. The HVAC system according to claim 5, wherein
the control unit (26) is further configured to control the utilization-side unit (20) such that the utilization-side heat exchanger (22) does not exchange heat with the indoor air (24) of the indoor space (10a,10b) when
IAT - OAT > TDc and/or OAT - IAT > TDh
and/or TIc < TLc and/or TIh < TLh,
wherein TDc and TDh are predefined temperature differences, TIc and TIh are the time intervals elapsed since the beginning of the cooling/heating operation and before the target indoor air temperature (TIAT) is reached and TLc and TLh are predefined time limits.

7. The HVAC system according to any one of the preceding claims, wherein the at least one sensor (44,46) comprises
an air quality sensor (46) configured to measure concentrations of carbon dioxide (CO2) and/or volatile organic compounds (VOC) in the indoor space (10a,10b),
wherein the control unit (26) is further configured to determine the indoor air quality (IAQ) based on the measured concentrations of carbon dioxide (CO2) and/or volatile organic compounds (VOC), to compare a target indoor air quality (TIAQ) with the determined indoor air quality (IAQ) and to control the air outlet valve (34) for adjusting the flow of to be supplied outdoor air (18) into the indoor space (10a,10b) based on the comparison.

8. The HVAC system according to claim 7, wherein
the control unit (26) is further configured to control the air outlet valve (34) such that to be supplied outdoor air (18) flows into the indoor space (10a,10b) when IAQ < TIAQ and/or TCO2 < CO2 and/or TVOC < VOC,
wherein TCO2 and TVOC are target concentrations of carbon dioxide resp. of volatile organic compounds.

9. The HVAC system according to any one of the preceding claims, further comprising
a second utilization-side unit (20) provided in a second indoor space (10a,10b), the utilization-side unit (20) comprising
a second utilization-side heat exchanger (22) directly or indirectly connected with the refrigerant circuit (14) and configured to exchange heat with the indoor air (24) of the second indoor space (10a,10b),
a second air outlet (32) in fluid communication with the air duct (30) and
a second outlet valve (34) for adjusting the amount of outdoor air (18) flowing through the second air outlet (32) into the second indoor space (10a,10b), and at least a second sensor (44,46) for detecting a second parameter in the second indoor space (10a,10b).

10. The HVAC system according to claim 9, wherein
the control unit (26) is further configured to control the second outlet valve (34) based on the second parameter detected by the second sensor (44,46).

11. The HVAC system according to claim 9, further comprising
a second control unit (26) configured to control the second outlet valve (34) based on the second parameter detected by the second sensor (44,46),
wherein the first control unit (26) is provided in the first utilization-side unit (20) and the second control unit (26) is provided in the second utilization-side unit (20).

12. The HVAC system according to any one of the preceding claims,
wherein the heat pump system further comprises
a refrigerant circuit (14) containing a refrigerant and a heat source-side unit (16) comprising a heat source side heat exchanger connected to the refrigerant circuit (14) and configured to exchange heat between the refrigerant and outdoor air (18), and
wherein the utilization-side heat exchanger (22) of the utilization-side unit (20) is connected to the refrigerant circuit (14) and configured to exchange heat between the refrigerant and the indoor air (24a,24b) of the indoor space (10a,10b).

13. The HVAC system according to any one of claims 1 to 11,
wherein the heat pump system further comprises
a refrigerant circuit (14) containing a refrigerant and a heat source-side unit (16) comprising a heat source side heat exchanger connected to the refrigerant circuit (14) and configured to exchange heat between the refrigerant and outdoor air (18) and
an energy transporting fluid circuit containing an energy transporting fluid and an energy transporting fluid heat exchanger connected to the refrigerant circuit (14) and the energy transporting fluid circuit and configured to exchange heat between the refrigerant and the energy transporting fluid, and
wherein the utilization-side heat exchanger (22) of the utilization-side unit (20) is connected to the energy transporting fluid circuit and configured to exchange heat between the energy transporting fluid and the indoor air (24a,24b) of the indoor space (10a,10b).

## Patentansprüche

1. Heizungs-, Lüftungs- und Klimatisierungs- (HVAC) System für einen Innenraum (10a, 10b) eines Gebäudes (10), wobei das HVAC-System umfasst:
ein Wärmepumpensystem, das so konfiguriert ist, dass es dem Innenraum (10a, 10b) Wärme oder Kälte zuführt, wobei das Wärmepumpensystem einen Kältemittelkreislauf (14) umfasst,
ein Lüftungssystem, das so konfiguriert ist, dass es dem Innenraum (10a, 10b) Außenraumluft (18) zuführt, wobei das Lüftungssystem umfasst
eine Lüftungseinheit (28), die so konfiguriert ist, dass sie Außenraumluft (18) von der Außenseite des Gebäudes (10) ansaugt, und
einen Luftkanal (30), der mit der Lüftungseinheit (28) verbunden ist, um die Außenraumluft (18) in den Innenraum (10a, 10b) zu leiten,
eine nutzungsseitige Einheit (20), die in einem Innenraum (10a, 10b) bereitgestellt ist, wobei die nutzungsseitige Einheit (20) umfasst
einen nutzungsseitigen Wärmetauscher (22), der direkt oder indirekt mit dem Kältemittelkreislauf (14) verbunden und so konfiguriert ist, dass er Wärme mit der Innenraumluft (24) des Innenraums (10a, 10b) austauscht,
einen Luftauslass (32) in Fluidverbindung mit dem Luftkanal (30) und
ein Auslassventil (34) zum Einstellen der Menge an Außenraumluft (18), die durch den Luftauslass (32) in den Innenraum (10a, 10b) strömt,
mindestens einen Sensor (44, 46) zum Detektieren eines Parameters des Innenraums (10a, 10b) und
eine Steuereinheit (26), die so konfiguriert ist, dass sie das Auslassventil (34) auf der Grundlage des von dem Sensor (44, 46) detektierten Parameters steuert,
**dadurch gekennzeichnet, dass**
die nutzungsseitige Einheit (20) ein Gehäuse umfasst, wobei das Gehäuse ein Lüftungsfach und ein Klimatisierungsfach definiert, wobei der nutzungsseitige Wärmetauscher (22) in dem Klimatisierungsfach untergebracht ist und der Luftauslass (32) und
das Auslassventil (34) in dem Lüftungsfach untergebracht sind, so dass die Außenraumluft (18) in den Innenraum (10a, 10b) strömen kann, ohne durch den nutzungsseitigen Wärmetauscher (22) zu strömen.

2. HKL-System nach Anspruch 1, wobei
der mindestens eine Sensor (44, 46) in der nutzungsseitigen Einheit (20) oder in der Steuereinheit (26) bereitgestellt ist.

3. HKL-System nach einem der vorstehenden Ansprüche, wobei
das Lüftungssystem weiter so konfiguriert ist, dass es Innenraumluft (24) aus dem Inneren des Gebäudes (10) zu der Außenseite des Gebäudes (10) abführt und weiter umfasst
einen Lüftungswärmetauscher (36) mit einem Außenraumlufteinlass, einem Außenraumluftauslass, einem Innenraumlufteinlass und einem Innenraumluftauslass, und der von der abgeführten Innenraumluft (24) durchströmt wird und dem Außenraumluft (18) zugeführt wird, um Wärme zwischen der abgeführten Innenraumluft (24) und der zugeführten Außenraumluft (18) auszutauschen,
einen Lüftungsbypass (38), der den Außenraumlufteinlass und den Außenraumluftauslass verbindet und den Lüftungswärmetauscher (36) umgeht, und
ein Bypassventil (40) zum Einstellen des Stroms der zuzuführenden Außenraumluft (18) durch den Lüftungswärmetauscher (36) und durch den Lüftungsbypass (38),
wobei die Steuereinheit (26) weiter so konfiguriert ist, dass sie das Bypassventil (40) steuert, um den Strom der zuzuführenden Außenraumluft (18) durch den Lüftungswärmetauscher (36) und durch den Lüftungsbypass (38) einzustellen.

4. HKL-System nach Anspruch 3, weiter umfassend
einen Außenraumtemperatursensor (42) zum Messen der Außenraumlufttemperatur (OAT),
wobei der mindestens eine Sensor (44, 46) einen Innenraumtemperatursensor (44) zum Messen der Innenraumlufttemperatur (IAT) in dem Innenraum (10a, 10b) umfasst und
wobei die Steuereinheit (26) weiter so konfiguriert ist, dass sie eine für den Innenraum (10a, 10b) eingestellte Zielinnenraumlufttemperatur (TIAT) mit einer gemessenen Außenraumlufttemperatur (OAT) und einer gemessenen Innenraumlufttemperatur (IAT) in dem Innenraum (10a, 10b) vergleicht und das Bypassventil (40) und/oder das Luftauslassventil (34) auf der Grundlage des Vergleichs steuert.

5. HKL-System nach Anspruch 4, wobei
die Steuereinheit (26) weiter so konfiguriert ist, dass sie das Luftauslassventil (34) so steuert, dass zuzuführende Außenraumluft (18a, 18b) in den Innenraum (10a, 10b) strömt, und/oder das Bypassventil (40) so steuert, dass zuzuführende Außenraumluft (18) durch den Lüftungsbypass (38) unter Umgehung des Lüftungswärmetauschers (36) strömt, wenn TIAT < IAT > OAT und/oder TIAT > IAT < OAT.

6. HKL-System nach Anspruch 5, wobei
die Steuereinheit (26) weiter so konfiguriert ist, dass sie die nutzungsseitige Einheit (20) so steuert, dass der nutzungsseitige Wärmetauscher (22) keine Wärme mit der Innenraumluft (24) des Innenraums (10a, 10b) austauscht, wenn
IAT - OAT > TDc und/oder OAT - IAT > TDh
und/oder TIc < TLc und/oder TIh < TLh,
wobei TDc und TDh vordefinierte Temperaturdifferenzen sind, TIc und TIh die Zeitintervalle sind, die seit Beginn des Kühl-/Heizbetriebs und vor Erreichen der Zielinnenraumlufttemperatur (TIAT) verstrichen sind, und TLc und TLh vordefinierte Zeitgrenzen sind.

7. HKL-System nach einem der vorstehenden Ansprüche, HKL-System nach einem der vorstehenden Ansprüche, wobei der mindestens eine Sensor (44, 46) umfasst
einen Luftqualitätssensor (46), der so konfiguriert ist, dass er die Konzentrationen von Kohlendioxid (CO2) und/oder flüchtigen organischen Verbindungen (VOC) in dem Innenraum (10a, 10b) misst,
wobei die Steuereinheit (26) weiter so konfiguriert ist, dass sie die Innenraumluftqualität (IAQ) auf der Grundlage der gemessenen Konzentrationen von Kohlendioxid (CO2) und/oder flüchtigen organischen Verbindungen (VOC) bestimmt, eine Zielinnenraumluftqualität (TIAQ) mit der bestimmten Innenraumluftqualität (IAQ) vergleicht und das Luftauslassventil (34) steuert, um den Strom der zuzuführenden Außenraumluft (18) in den Innenraum (10a, 10b) auf der Grundlage des Vergleichs einzustellen.

8. HKL-System nach Anspruch 7, wobei
die Steuereinheit (26) weiter so konfiguriert ist, dass sie das Luftauslassventil (34) so steuert, dass zuzuführende Außenraumluft (18) in den Innenraum (10a, 10b) strömt, wenn IAQ < TIAQ und/oder TCO2 < CO2 und/oder TVOC < VOC,
wobei TCO2 und TVOC Zielkonzentrationen von Kohlendioxid bzw. von flüchtigen organischen Verbindungen sind.

9. HKL-System nach einem der vorstehenden Ansprüche, weiter umfassend
eine zweite nutzungsseitige Einheit (20), die in einem zweiten Innenraum (10a, 10b) bereitgestellt ist, wobei die nutzungsseitige Einheit (20) umfasst
einen zweiten nutzungsseitigen Wärmetauscher (22), der direkt oder indirekt mit dem Kältemittelkreislauf (14) verbunden und zum Wärmeaustausch mit der Innenraumluft (24) des zweiten Innenraums (10a, 10b) konfiguriert ist,
einen zweiten Luftauslass (32) in Fluidverbindung mit dem Luftkanal (30) und
und ein zweites Auslassventil (34) zum Einstellen der Menge an Außenraumluft (18), die durch den zweiten Luftauslass (32) in den zweiten Innenraum (10a, 10b) strömt, und mindestens einen zweiten Sensor (44, 46) zum Detektieren eines zweiten Parameters in dem zweiten Innenraum (10a, 10b).

10. HKL-System nach Anspruch 9, wobei
die Steuereinheit (26) weiter so konfiguriert ist, dass sie das zweite Auslassventil (34) auf der Grundlage des von dem zweiten Sensor (44, 46) detektierten zweiten Parameters steuert.

11. HKL-System nach Anspruch 9, weiter umfassend
eine zweite Steuereinheit (26), die so konfiguriert ist, dass sie das zweite Auslassventil (34) auf der Grundlage des von dem zweiten Sensor (44, 46) detektierten zweiten Parameters steuert,
wobei die erste Steuereinheit (26) in der ersten nutzungsseitigen Einheit (20) bereitgestellt ist und die zweite Steuereinheit (26) in der zweiten nutzungsseitigen Einheit (20) bereitgestellt ist.

12. HKL-System nach einem der vorstehenden Ansprüche,
wobei das Wärmepumpensystem weiter umfasst
einen Kältemittelkreislauf (14), der ein Kältemittel enthält, und eine wärmequellenseitige Einheit (16), die einen wärmequellenseitigen Wärmetauscher umfasst, der mit dem Kältemittelkreislauf (14) verbunden und so konfiguriert ist, dass er Wärme zwischen dem Kältemittel und der Außenraumluft (18) austauscht, und
wobei der nutzungsseitige Wärmetauscher (22) der nutzungsseitigen Einheit (20) mit dem Kältemittelkreislauf (14) verbunden ist und so konfiguriert ist, dass er Wärme zwischen dem Kältemittel und der Innenraumluft (24a, 24b) des Innenraums (10a, 10b) austauscht.

13. HKL-System nach einem der Ansprüche 1 bis 11,
wobei das Wärmepumpensystem weiter umfasst
einen Kältemittelkreislauf (14), der ein Kältemittel aufweist, und eine wärmequellenseitige Einheit (16), die einen wärmequellenseitigen Wärmetauscher umfasst, der mit dem Kältemittelkreislauf (14) verbunden und so konfiguriert ist, dass er Wärme zwischen dem Kältemittel und der Außenraumluft (18) austauscht und
einen Energietransportfluidkreislauf, der ein Energietransportfluid enthält, und einen Energietransportfluid-Wärmetauscher, der mit dem Kältemittelkreislauf (14) und dem Energietransportfluidkreislauf verbunden und so konfiguriert ist, dass er Wärme zwischen dem Kältemittel und dem Energietransportfluid austauscht, und
wobei der nutzungsseitige Wärmetauscher (22) der nutzungsseitigen Einheit (20) mit dem Energietransportfluidkreislauf verbunden ist und so konfiguriert ist, dass er Wärme zwischen dem Energietransportfluid und der Innenraumluft (24a, 24b) des Innenraums (10a, 10b) austauscht.

## Revendications

1. Système de chauffage, ventilation et climatisation (HVAC) pour un espace intérieur (10a, 10b) d'un bâtiment (10), le système HVAC comprenant :
un système de pompe à chaleur configuré pour fournir de la chaleur ou du froid à l'espace intérieur (10a, 10b), le système de pompe à chaleur comprenant un circuit (14) de réfrigérant,
un système de ventilation configuré pour fournir de l'air extérieur (18) à l'espace intérieur (10a, 10b), le système de ventilation comprenant
une unité de ventilation (28) configurée pour aspirer l'air extérieur (18) depuis l'extérieur du bâtiment (10) et
un conduit (30) d'air raccordé à l'unité de ventilation (28) pour guider l'air extérieur (18) vers l'espace intérieur (10a,10b),
une unité côté utilisation (20) prévue dans un espace intérieur (10a, 10b), l'unité côté utilisation (20) comprenant
un échangeur de chaleur côté utilisation (22) directement ou indirectement raccordé au circuit (14) de réfrigérant et configuré pour échanger de la chaleur avec l'air intérieur (24) de l'espace intérieur (10a, 10b),
une sortie d'air (32) en communication fluidique avec le conduit (30) d'air et
une soupape de sortie (34) pour régler la quantité d'air extérieur (18) s'écoulant à travers la sortie d'air (32) dans l'espace intérieur (10a, 10b),
au moins un capteur (44, 46) pour détecter un paramètre de l'espace intérieur (10a, 10b) et
une unité de commande (26) configurée pour commander la soupape de sortie (34) sur la base du paramètre détecté par le capteur (44, 46),
**caractérisé en ce que**
l'unité côté utilisation (20) comprend un boîtier, le boîtier définissant un compartiment de ventilation et un compartiment de climatisation, l'échangeur de chaleur côté utilisation (22) étant reçu dans le compartiment de climatisation et la sortie d'air (32) et la soupape de sortie (34) étant reçue dans le compartiment de ventilation de sorte que l'air extérieur (18) puisse circuler dans l'espace intérieur (10a, 10b) sans s'écouler à travers l'échangeur de chaleur côté utilisation (22).

2. Système HVAC selon la revendication 1, dans lequel
l'au moins un capteur (44, 46) est prévu dans l'unité côté utilisation (20) ou dans l'unité de commande (26).

3. Système HVAC selon l'une quelconque des revendications précédentes, dans lequel
le système de ventilation est en outre configuré pour évacuer l'air intérieur (24) de l'intérieur du bâtiment (10) vers l'extérieur du bâtiment (10) et comprend en outre
un échangeur de chaleur de ventilation (36) présentant une entrée d'air extérieur, une sortie d'air extérieur, une entrée d'air intérieur et une sortie d'air intérieur et traversé par de l'air intérieur évacué (24) et de l'air extérieur (18) devant être fourni pour échanger de la chaleur entre l'air intérieur évacué (24) et l'air extérieur (18) fourni,
une dérivation (38) de ventilation raccordant l'entrée d'air extérieur et la sortie d'air extérieur et contournant l'échangeur de chaleur de ventilation (36), et
une soupape de dérivation (40) pour régler le débit d'air extérieur (18) devant être fourni à travers l'échangeur de chaleur de ventilation (36) et à travers la dérivation (38) de ventilation,
dans lequel l'unité de commande (26) est en outre configurée pour commander la soupape de dérivation (40) pour régler le débit d'air extérieur (18) devant être fourni à travers l'échangeur de chaleur de ventilation (36) et à travers la dérivation (38) de ventilation.

4. Système HVAC selon la revendication 3, comprenant en outre
un capteur de température extérieure (42) pour mesurer la température d'air extérieur (OAT),
dans lequel l'au moins un capteur (44, 46) comprend un capteur de température intérieure (44) pour mesurer la température d'air intérieur (IAT) dans l'espace intérieur (10a, 10b) et
dans lequel l'unité de commande (26) est en outre configurée pour comparer une température d'air intérieur cible (TIAT) définie pour l'espace intérieur (10a, 10b) à une température d'air extérieur mesurée (OAT) et une température d'air intérieur mesurée (IAT) dans l'espace intérieur (10a, 10b) et pour commander la soupape de dérivation (40) et/ou la soupape de sortie (34) d'air sur la base de la comparaison.

5. Système HVAC selon la revendication 4, dans lequel
l'unité de commande (26) est en outre configurée pour commander la soupape de sortie (34) d'air de sorte que l'air extérieur (18a, 18b) devant être fourni s'écoule dans l'espace intérieur (10a, 10b) et/ou la soupape de dérivation (40) de sorte que l'air extérieur (18) devant être fourni s'écoule à travers la dérivation (38) de ventilation contournant l'échangeur de chaleur de ventilation (36) lorsque TIAT < IAT > OAT et/ou TIAT > IAT < OAT.

6. Système HVAC selon la revendication 5, dans lequel
l'unité de commande (26) est en outre configurée pour commander l'unité côté utilisation (20) de sorte que l'échangeur de chaleur côté utilisation (22) n'échange pas de chaleur avec l'air intérieur (24) de l'espace intérieur (10a,10b) lorsque
IAT - OAT > TDc et/ou OAT - IAT > TDh
et/ou TIc < TLc et/ou TIh < TLh,
dans lequel TDc et TDh sont des différences de température prédéfinies, TIc et TIh sont les intervalles de temps écoulés depuis le début de l'opération de refroidissement/chauffage et avant que la température d'air intérieur cible (TIAT) ne soit atteinte et TLc et TLh sont des limites de temps prédéfinies.

7. Système HVAC selon l'une quelconque des revendications précédentes, dans lequel l'au moins un capteur (44, 46) comprend :
un capteur de qualité d'air (46) configuré pour mesurer des concentrations de dioxyde de carbone (CO2) et/ou de composés organiques volatils (VOC) dans l'espace intérieur (10a, 10b),
dans lequel l'unité de commande (26) est en outre configurée pour déterminer la qualité de l'air intérieur (IAQ) sur la base des concentrations mesurées de dioxyde de carbone (CO2) et/ou de composés organiques volatils (VOC), pour comparer une qualité d'air intérieur cible (TIAQ) à la qualité d'air intérieur déterminée (IAQ) et pour commander la soupape de sortie (34) d'air pour régler le débit d'air extérieur (18) devant être fourni dans l'espace intérieur (10a,10b) sur la base de la comparaison.

8. Système HVAC selon la revendication 7, dans lequel
l'unité de commande (26) est en outre configurée pour commander la soupape de sortie (34) d'air de sorte que l'air extérieur (18) devant être fourni s'écoule dans l'espace intérieur (10a, 10b) lorsque IAQ < TIAQ et/ou TCO2 < CO2 et/ou TVOC < VOC,
dans lequel TCO2 et TVOC sont des concentrations cibles de dioxyde de carbone resp. de composés organiques volatils.

9. Système HVAC selon l'une quelconque des revendications précédentes, comprenant en outre
une seconde unité côté utilisation (20) prévue dans un second espace intérieur (10a, 10b), l'unité côté utilisation (20) comprenant
un second échangeur de chaleur côté utilisation (22) directement ou indirectement raccordé au circuit (14) de réfrigérant et configuré pour échanger de la chaleur avec l'air intérieur (24) du second espace intérieur (10a, 10b),
une seconde sortie d'air (32) en communication fluidique avec le conduit (30) d'air et
une seconde soupape de sortie (34) pour régler la quantité d'air extérieur (18) s'écoulant à travers la seconde sortie d'air (32) dans le second espace intérieur (10a, 10b), et au moins un second capteur (44,46) pour détecter un second paramètre dans le second espace intérieur (10a, 10b).

10. Système HVAC selon la revendication 9, dans lequel
l'unité de commande (26) est en outre configurée pour commander la seconde soupape de sortie (34) sur la base du second paramètre détecté par le second capteur (44, 46).

11. Système HVAC selon la revendication 9, comprenant en outre
une seconde unité de commande (26) configurée pour commander la seconde soupape de sortie (34) sur la base du second paramètre détecté par le second capteur (44, 46),
dans lequel la première unité de commande (26) est prévue dans la première unité côté utilisation (20) et la seconde unité de commande (26) est prévue dans la seconde unité côté utilisation (20).

12. Système HVAC selon l'une quelconque des revendications précédentes,
dans lequel le système de pompe à chaleur comprend en outre
un circuit (14) de réfrigérant contenant un réfrigérant et une unité côté source de chaleur (16) comprenant un échangeur de chaleur côté source de chaleur raccordé au circuit (14) de réfrigérant et configuré pour échanger de la chaleur entre le réfrigérant et l'air extérieur (18), et
dans lequel l'échangeur de chaleur côté utilisation (22) de l'unité côté utilisation (20) est raccordé au circuit (14) de réfrigérant et configuré pour échanger de la chaleur entre le réfrigérant et l'air intérieur (24a, 24b) de l'espace intérieur (10a, 10b).

13. Système HVAC selon l'une quelconque des revendications 1 à 11,
dans lequel le système de pompe à chaleur comprend en outre
un circuit (14) de réfrigérant contenant un réfrigérant et une unité côté source de chaleur (16) comprenant un échangeur de chaleur côté source de chaleur raccordé au circuit (14) de réfrigérant et configuré pour échanger de la chaleur entre le réfrigérant et l'air extérieur (18) et
un circuit de fluide de transport d'énergie contenant un fluide de transport d'énergie et un échangeur de chaleur de fluide de transport d'énergie raccordé au circuit (14) de réfrigérant et au circuit de fluide de transport d'énergie et configuré pour échanger de la chaleur entre le réfrigérant et le fluide de transport d'énergie, et
dans lequel l'échangeur de chaleur côté utilisation (22) de l'unité côté utilisation (20) est raccordé au circuit de fluide de transport d'énergie et configuré pour échanger de la chaleur entre le fluide de transport d'énergie et l'air intérieur (24a, 24b) de l'espace intérieur (10a, 10b).
